# EUROPÄISCHE PATENTANMELDUNG

(11) **EP 1 484 582 A1**
(43) Veröffentlichungstag der Anmeldung: **08.12.2004**
(21) Anmeldenummer: 04010817.7
(22) Anmeldetag: 06.05.2004
(51) Int. Cl.: G01D 5/347

(54) **Optoelektronischer Drehwinkelsensor**

(30) Priorität: 03.06.2003 DE 10325108
(71) Anmelder: TRW Automotive Electronics & Components GmbH & Co. KG, 78315 Radolfzell (DE)
(72) Erfinder: Kail, Andreas, 78239 Rielasingen (DE); Köhnlein, Harald, 78315 Radolfzell (DE); Brütsch, Wolfgang, 78315 Bodman-Ludwigshafen (DE); Mordau, Ulf, 78652 Deisslingen (DE)
(74) Vertreter: Sties, Jochen, Dipl.-Ing.

(57) **Zusammenfassung**

Die Erfindung betrifft einen optoelektronischen Drehwinkelsensor, insbesondere zur Lenkwinkelerfassung in einem Fahrzeug-Lenksystem, mit einer Lichtquelle (1), einem fotosensitiven Empfänger (2A, 2B) und einer Codescheibe (4), die mit einem Bauteil, dessen Drehwinkel erfaßt werden soll, gekoppelt werden kann, für das Licht der Lichtquelle (1) zumindest partiell durchlässig ist und mit einer optischen Codierung versehen ist, dadurch gekennzeichnet, daß die Codescheibe (4) als Lichtleiter ausgebildet ist, mit einer Einkoppelfläche (5), über die das Licht der Lichtquelle (1) in die Codescheibe (4) eintritt, und mit wenigstens einer Umlenkfläche (7), die die Lichtstrahlen zum fotosensitiven Empfänger (2A, 2B) umlenkt.

## Beschreibung

Die Erfindung betrifft einen optoelektronischen Drehwinkelsensor, insbesondere zur Lenkwinkelerfassung in einem Fahrzeug-Lenksystem, mit einer Lichtquelle, einem fotosensitiven Empfänger und einer Codescheibe, die mit einem Bauteil, dessen Drehwinkel erfaßt werden soll, gekoppelt werden kann, für das Licht der Lichtquelle zumindest partiell durchlässig ist und mit einer optischen Codierung versehen ist.

Drehwinkelsensoren werden beispielsweise zur Bestimmung der Winkelstellung des Lenkrades eines Fahrzeugs, insbesondere eines Kraftfahrzeugs, eingesetzt. Daher wird ein solcher Sensor auch als Lenkwinkelsensor bezeichnet. Ein mit einem Fahrdynamikregelsystem ausgestattetes Fahrzeug benötigt den Lenkwinkel neben anderen Parametern zur Steuerung von Aktoren, die auf bestimmte Fahrzeugkomponenten einwirken, wie Bremsen oder Fahrzeugmotor.

Es sind optoelektronische Drehwinkelsensoren mit an die Drehbewegung beispielsweise eines Fahrzeuglenkrades gekoppelten Codescheiben bekannt, wobei die Codescheibe eine optische Codierung aufweist und eine Lichtquelle vorgesehen ist, deren Lichtstrahlen in einem Lichtleitkörper auf die Codescheibe zur Bestrahlung der Codierung umgelenkt werden. Das Material der Codescheibe ist für die Strahlung der Lichtquelle entsprechend der verwendeten Wellenlänge zumindest partiell durchlässig. Ein fotosensitiver Empfänger dient zur Aufnahme der die Codescheibe und die Codierung durchlaufenden Lichtstrahlen. Vorzugsweise sind Lichtquelle, Empfänger und Lichtleitkörper auf einem gemeinsamen Träger angeordnet. Ein solcher optoelektronischer Drehwinkelsensor wird beispielsweise in der DE 100 36 769 A1 beschrieben.

Die Verwendung eines Lichtleitkörpers zur Umlenkung der Lichtstrahlen auf die Codierung und den fotosensitiven Empfänger bedingt eine ungünstige Dimensionierung des gesamten Sensors zumindest in der Höhe über den eigentlichen Platzbedarf von Codescheibe, Lichtquelle und Empfänger hinaus, da die Lichtstrahlen die Codescheibe in axialer Richtung durchqueren und daher auf der dem Empfänger gegenüberliegenden Seite der Codescheibe entsprechend Raum für den Lichtleitkörper zu berücksichtigen ist.

Der Erfindung liegt die Aufgabe zugrunde, einen optoelektronischen Drehwinkelsensor dahingehend weiterzubilden, daß ein geringerer Raumbedarf und eine vereinfachte Montage der Sensorkomponenten erreicht wird.

Diese Aufgabe wird erfindungsgemäß dadurch gelöst, daß die Codescheibe als Lichtleiter ausgebildet ist, mit einer Einkoppelfläche, über die das Licht der Lichtquelle in die Codescheibe eintritt, und mit wenigstens einer Umlenkfläche, die die Lichtstrahlen zum fotosensitiven Empfänger umlenkt. Durch diesen Aufbau des Drehwinkelsensors läßt sich ein Lichtleitkörper als separates Bauteil einsparen, und die Abmessungen des Sensors in der Höhe werden verringert, da als Einkoppelfläche die Umfangsfläche der Codescheibe verwendet werden kann.

Als Lichtquelle findet beispielsweise eine LED Verwendung, deren Lichtstrahlen über eine Einkoppelfläche an der Codescheibe seitlich in radialer Richtung in diese eintreten, wobei die Einkoppelfläche in einer Ausführungsform der Erfindung als Linse ausgebildet ist, um die divergenten Lichtstrahlen für den weiteren Verlauf durch die Codescheibe im wesentlichen parallel auszurichten. Trifft ein solches Lichtbündel auf eine Umlenkfläche in der Codescheibe, so wird zumindest ein Teil des Lichtbündels in axialer Richtung umgeleitet, tritt aus der Codescheibe aus, beleuchtet dabei den an dieser Stelle vorhandenen Code-Abschnitt und trifft anschließend auf wenigstens einen fotosensitiven Empfänger, der auf einer Leiterplatte angebracht ist.

In bevorzugten Ausführungsformen der Erfindung werden Fototransistoren mit unterschiedlichen Abmessungen als Empfänger verwendet, wobei kleinere Fototransistoren an der der Codescheibe zugewandten Seite und größere Fototransistoren an der der Codescheibe abgewandten Seite der Leiterplatte angebracht sein können. Die Leiterplatte weist in diesem Bereich eine Öffnung auf, durch die ein Teil des umgelenkten Lichtsin einen an der der Codescheibe abgewandten Seite der Leiterplatte angebrachten Fototransistor gelangt. Die Öffnung wirkt dabei als Blende für die hindurchtretenden Lichtstrahlen, deren Wirkung über die Größe der Öffnung beeinflußt werden kann. Zur Auswertung der codierten Information werden die Signale sämtlicher Empfänger verwendet. Auf diese Weise läßt sich eine erhöhte Genauigkeit des Sensors erreichen. Darüber hinaus dient die Leiterplatte auch als Träger für die Lichtquelle.

Zwischen Codescheibe und Leiterplatte ist in einer bevorzugten Ausführungsform der Erfindung eine zusätzliche Blende vorgesehen, die zur optimalen Anpassung an unterschiedliche Empfänger justierbar und austauschbar ist.

Durch die Verwendung eines weiteren fotosensitiven Empfängers, der in einem Bereich außerhalb der Codierung an der Codescheibe vorgesehen ist, läßt sich ein Referenzsignal zur Kalibrierung und zur Reduktion eines Ruhestroms ermitteln. Eine Verbesserung der Sensorauflösung kann darüber hinaus mit mehreren über den Umfang der Codescheibe verteilten Lichtquellen erreicht werden.

Vorteilhafte Ausführungen der Erfindung ergeben sich aus den Unteransprüchen.

Die Erfindung wird nachfolgend anhand einer Ausführungsform näher beschrieben, die in den beigefügten Zeichnungen dargestellt ist. In diesen zeigen:
- Figur1 in einer Explosionszeichnung einen erfindungsgemäßen optoelektronischen Drehwinkelsensor;
- Figur 2 in einer Schnittansicht einen erfindungsgemäßen optoelektronischen Drehwinkelsensor gemäß Figur 1.

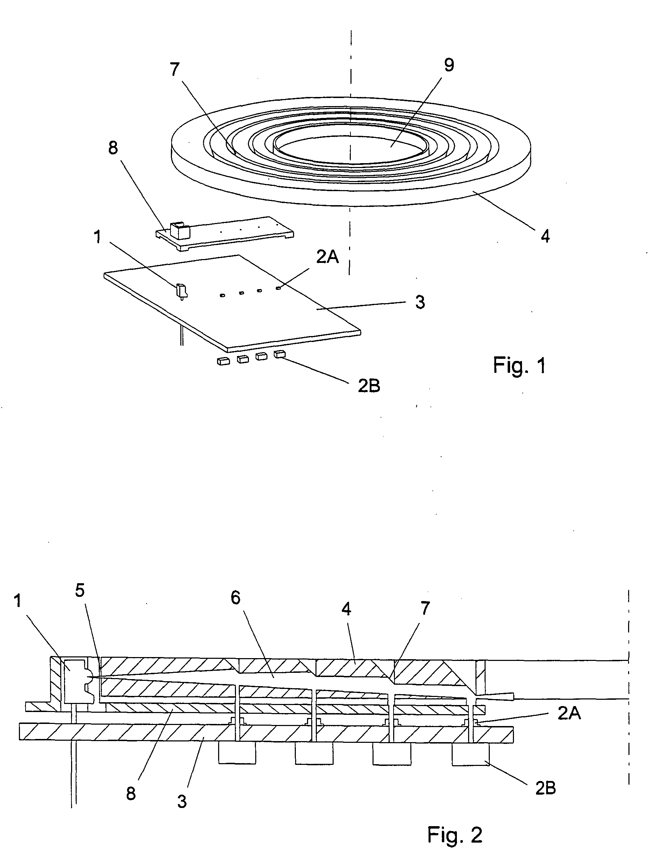

Figur 1 zeigt die wesentlichen Bestandteile eines erfindungsgemäßen optoelektronischen Drehwinkelsensors einer bevorzugten Ausführungsform in einem nicht zusammengefügten Zustand. Eine Lichtquelle 1, vorzugsweise eine Infrarot-LED, ist auf einer Leiterplatte 3 angeordnet. Lichtstrahlen der Lichtquelle 1 strahlen seitlich in radialer Richtung auf eine Codescheibe 4, die aus einem für die verwendete Wellenlänge durchlässigem Material, vorzugsweise Plexiglas, besteht. Die Codescheibe 4 weist in ihrer Mitte eine Öffnung 9 auf, in die beispielsweise die Lenkspindel eines Fahrzeugs drehfest eingreift. Konzentrisch angeordnete Umlenkflächen 7 innerhalb der Codescheibe 4 werden durch schräg zum radialen Lichtverlauf angeordnete Spiegelflächen gebildet, an denen eine Lichtstrahlumlenkung durch Totalreflektion stattfindet.

Auf die Unterseite der Codescheibe 4 ist eine optische Codierung aufgebracht, die beispielsweise durch eine Kombination von lichtdurchlässigen und lichtundurchlässigen Bereichen gebildet wird. Die Codierung kann durch ein Offset-Druck-Verfahren, ein Laser-Verfahren oder eine spezielle Lackierung aufgebracht sein. Der die Codierung umfassende Abschnitt der Codescheibe 4 befindet sich im Bereich der Leiterplatte 3. In diesem Bereich sind in radialer Richtung ausgehend von der Lichtquelle 1 fotosensitive Empfänger 2A, 2B zur Aufnahme der in der Codescheibe 4 umgelenkten Lichtstrahlen angeordnet. Die fotosensitiven Empfänger 2A, 2B sind in einer Ausführungsform der Erfindung an der der Codescheibe 4 zugewandten Seite der Leiterplatte 3 und in ein weitereren Ausführungsform an der der Codescheibe 4 abgewandten Seite der Leiterplatte 3 angebracht. Die Leiterplatte 3 ist am Ort des fotosensitiven Empfängers 2B mit einer Öffnung versehen, durch die das in der Codescheibe 4 umgelenkte Lichtbündelhindurchtritt und in den Fototransistor 2B einfällt. Diese Öffnung dient gleichzeitig als Blende zur Regulierung des Lichtbündels. Eine zusätzliche justierbare Blende 8 befindet sich zwischen Codescheibe 4 und Leiterplatte 3. Alternativ kann die Blende 8 direkt auf der Leiterplatte 3 angebracht sein.

In Figur 2 ist der Verlauf eines Lichtbündels 6 durch eine Codescheibe 4 bei einem erfindungsgemäßen optoelektronischen Drehwinkelsensor gemäß Figur 1 gezeigt. Das von einer Lichtquelle 1 ausgesendete Lichtbündel 6 tritt über eine Einkoppelfläche 5 in die Codescheibe 4 ein, wobei die Einkoppelfläche 5 in einer bevorzugten Ausführungsform der Erfindung als Linse wirkt und den divergenten Lichtstrahl der Lichtquelle 1 im wesentlichen parallel ausrichtet. Die Einkoppelfläche 5 kann allerdings auch plan ausgebildet sein, da Streulichtverluste weitgehend vernachlässigbar sind. Das Lichtbündel 6 verläuft innerhalb der Codescheibe 4 in radialer Richtung nach innen. Die Codescheibe 4 weist an bestimmten Stellen Umlenkflächen 7 auf, die einen Teil des Lichtbündels 6 in axialer Richtung umlenken, so daß dieser Anteil des Lichtbündels 6 aus der Codescheibe 4 austritt, eine auf die Codescheibe 4 aufgebrachte optische Codierung beleuchtet, durch eine Blende 8 hindurchtritt und auf fotosensitive Empfänger 2A, 2B trifft.

Der jeweils umgelenkte Anteil des Lichtbündels 6 ergibt sich durch die Anordnung der Umlenkfläche 7 und das Verhältnis des vom Lichtbündel 6 bestrahlten spiegelnden Bereichs der jeweiligen Umlenkfläche 7 zum Gesamtquerschnitt des Lichtbündels 6. Durch die konkrete Ausgestaltung der Umlenkflächen 7 läßt sich somit eine Aufteilung der Intensität des Lichtbündels 6 hinsichtlich der zu beleuchtenden Codierung in verschiedenen Bereichen der Codescheibe 4 erreichen. Nachdem das umgelenkte Licht die optische Codierung und eine zur Justierung und Ausrichtung des Lichtstrahls eingesetzte Blende 8 passiert hat, trifft es in einer Ausführungsform der Erfindung auf einen fotosensitiven Empfänger 2A. In einer weiteren Ausführungsform tritt der umgelenkte Lichtstrahl durch eine Öffnung der Leiterplatte hindurch und fällt in einen fotosensitiven Empfänger 2B ein.

## Patentansprüche

1. Optoelektronischer Drehwinkelsensor, insbesondere zur Lenkwinkelerfassung in einem Fahrzeug-Lenksystem, mit einer Lichtquelle (1), einem fotosensitiven Empfänger (2A, 2B) und einer Codescheibe (4), die mit einem Bauteil, dessen Drehwinkel erfaßt werden soll, gekoppelt werden kann, für das Licht der Lichtquelle (1) zumindest partiell durchlässig ist und mit einer optischen Codierung versehen ist, **dadurch gekennzeichnet, daß** die Codescheibe (4) als Lichtleiter ausgebildet ist, mit einer Einkoppelfläche (5), über die das Licht der Lichtquelle (1) in die Codescheibe (4) eintritt, und mit wenigstens einer Umlenkfläche (7), die die Lichtstrahlen zum fotosensitiven Empfänger (2A, 2B) umlenkt.

2. Optoelektronischer Drehwinkelsensor nach Anspruch 1, **dadurch gekennzeichnet, daß** die Einkoppelfläche (5) eine Umfangsfläche der Codescheibe (4) ist.

3. Optoelektronischer Drehwinkelsensor nach einem der vorhergehenden Ansprüche, **dadurch gekennzeichnet, daß** die Einkoppelfläche (5) der Codescheibe (4) als Linse ausgebildet ist, um einen im wesentlichen parallelen Lichtverlauf zu erreichen.

4. Optoelektronischer Drehwinkelsensor nach einem der vorhergehenden Ansprüche, **dadurch gekennzeichnet, daß** eine Blende (8) zur Justierung des Lichteinfalls zwischen der Codescheibe (4) und dem fotosensitiven Empfänger (2A, 2B) angeordnet ist

5. Optoelektronischer Drehwinkelsensor nach einem der vorhergehenden Ansprüche, **dadurch gekennzeichnet, daß** ein weiterer fotosensitiver Empfänger (2A, 2B) vorgesehen ist, der von der optischen Codierung unbeeinflußtes Licht aufnimmt.

6. Optoelektronischer Drehwinkelsensor nach einem der vorhergehenden Ansprüche, **dadurch gekennzeichnet, daß** mehrere Lichtquellen um den Umfang der Codescheibe (4) verteilt angeordnet sind.

7. Optoelektronischer Drehwinkelsensor nach einem der vorhergehenden Ansprüche, **dadurch gekennzeichnet, daß** eine Leiterplatte (3) den Träger für die Lichtquelle (1) und den fotosensitiven Empfänger (2A, 2B) bildet.

8. Optoelektronischer Drehwinkelsensor nach Anspruch 8, **dadurch gekennzeichnet, daß** die Leiterplatte (3) am Ort des fotosensitiven Empfängers (2A, 2B) eine Öffnung zum Durchtritt des umgelenkten Lichts aufweist.

9. Optoelektronischer Drehwinkelsensor nach Anspruch 9, **dadurch gekennzeichnet, daß** die Öffnung der Leiterplatte (3) als Blende für das umgelenkte Licht ausgebildet ist.
